# EUROPEAN PATENT APPLICATION

(11) **EP 4 064 654 A1**
(43) Date of publication of application: **28.09.2022**
(21) Application number: 22151971.3
(22) Date of filing: 18.01.2022
(51) Int. Cl.: H04L 67/62, H04L 69/28

(54) **DATA PROCESSING PROGRAM, DATA PROCESSING METHOD, AND DATA PROCESSING SYSTEM**

(30) Priority: 26.03.2021 JP 2021054388
(71) Applicant: FUJITSU LIMITED, Kawasaki-shi, Kanagawa 211-8588 (JP)
(72) Inventor: Nishiguchi, Naoki, Kawasaki-shi, Kanagawa 211-8588 (JP); Yamaoka, Hisatoshi, Kawasaki-shi, Kanagawa 211-8588 (JP); Okabayashi, Miwa, Kawasaki-shi, Kanagawa 211-8588 (JP)
(74) Representative: Hoffmann Eitle

(57) **Abstract**

A data processing program in which a computer executes performs processing of receiving a processing result processed by an external system, generating a first timestamp according to generated first time information that indicates internal time when receiving the processing result, outputting, before second time information that indicates time of after the first timestamp, external system data including the processing result that includes the first timestamp, and executing stream processing for the external system data at the time indicated by the second time information.

## Description

### [Field]

The embodiments discussed herein are related to a data processing program, a data processing method, and a data processing system.

### [Background Art]

In recent years, attention has been focused on use of stream data, such as Internet of things (IoT) data and traffic information, which is continuously generated and properties, trends, and values of which vary with the passage of time. Stream processing is important as a processing method for using such stream data.

In the stream processing, predetermined processing registered in advance is executed at timing when data is input, and the input data is sequentially processed on a memory without being stored in a storage or the like. For example, there is a system that executes predetermined processing for received IoT data and outputs the IoT data. In the stream processing, processing of data is managed as an event, and event time is registered in the data. Then, the stream processing manages a time according to the event time.

In such stream processing, for example, advanced processing or time-consuming processing may be requested to an external system instead of being processed in the system, and a processing result may be used in the stream processing. Here, in the stream processing, the processing is performed based on the event time included in the data. Therefore, to use the processing result by the external system in the stream processing, the event time is given to the processing result from the external system.

However, since the external system performs the processing in real time instead of the event time used in stream processing, the event time given to the processing result by the external system does not necessarily match the event time according to the progress of the stream processing. Then, the time of the event may deviate from the real time depending on timing when the processing result data input from the external system is input. For example, the time when data is created in a car navigation system becomes the event time, and the time when the data has actually arrived at the stream processing may differ from the event time given to the data. In such a case, the event time given to the data input from the external system may be time in the future or past time from the event time in the stream processing at the input timing.

Here, in the stream processing, when an event is accepted, information of the event time stored in each event is read, and the event time of each event is determined. Moreover, a watermark, which is time information indicating how far the processing for an event has been completed, is periodically calculated on the basis of the received event time, and is sent between events. The watermark is calculated, for example, at intervals of ten seconds as a value obtained by subtracting two seconds from the event time of an already received last event. Then, the processing for the event having the event time up to a specific watermark is considered to be completed at the point of time when the specific watermark has passed. Here, since the event times may arrive at different times, the value of the watermark is adjusted to an appropriate value by subtracting two seconds.

Furthermore, in the stream processing, change of the event time after receiving the event is not permitted. The reason is as follows. In the stream processing, as described above, the event time is fixed at the time of acceptance, and the watermark is calculated on the basis of the fixed event time to indicate how far the event time has advanced. In this situation, if the event time is changed after the event is accepted, there may be inconsistency with the watermark.

For example, in a case of changing the event time to event time before the already sent watermark, the event time has already passed in window processing to be described below, so the event with the changed event time becomes an event of past event time and will not be processed. Furthermore, in a case of changing the event time to future event time, the event processing will be suspended until the watermark indicating that the event time has passed appears. For this reason, it is not permissible to change the event time after the event is accepted.

Conventionally, watermarks are calculated separately from internal events, for events such as inputs of processing results from an external system. Then, the internal event and the event from the external system are merged when processing the event, and the commonly passed watermark is sent. For example, the current time is set in late event time. For example, in a case where the event time of the event from the external system is future time than the time of the internal event, the processing is performed with the internal event time until the watermark calculated from the event arrives, and during the processing, the event from external system is made to wait.

Moreover, in the stream processing, there is a mechanism called window processing of distributing an event for each period called window on the basis of the event time and processing the event in units of window in order to perform statistical processing of events within a period. In the window processing, the watermark is used as timing of the end of the window period, and the window in the watermark is closed at that timing. The event of the event time in the window period is processed when the window is closed. When closing the window, if there is no event having the event time in the window period, no window is closed. If there is no window to close, the stream processing does not perform the window processing.

For example, a case where a watermark of time obtained by subtracting two seconds is sent after an event and the window processing is performed for a two-second period will be described. First, a first event with the event time of 12:20:01 is accepted, and at this time, a first watermark at 12:19:59 is sent. This first watermark closes a previous watermark and windows up to the first watermark, but the event time of the first event is not included in this time, so the first event is not processed in the window processing here. Thereafter, a second event with the event time of 12:20:03 is accepted, and at this time, a second watermark at 12:20:01 is sent. This second watermark closes windows from the first watermark to the second watermark, and the window processing is performed for the first event included in the window from 12:20:00 to 12:20:01. Next, a third event with the event time of 12:20:04 is accepted, and at this time, a third watermark of 12:20:02 is sent. This third watermark closes windows from the second watermark to the third watermark. Note that there is no window to close during this time. Thereafter, when a watermark after 12:20:03 and before 12:20:04 is sent, the window processing is performed for the second event in the window of the period from 12:20:02 to 12:20:03 closed by the watermark. Meanwhile, when a watermark of or after 12:20:05 is sent, the second event is processed in the window processing in the period from 12:20:02 to 12:20:03 closed by the watermark, and the third event is processed by the window processing in the period from 12:20:04 to 12:20:05.

Moreover, the stream processing has a function called timer function. The timer function performs processing of embedding an event at specified event time in the stream processing when the specified event time has arrived. The event by this timer is embedded before a watermark at the current time as a trigger after the specified event time. The current time of the event by the timer is the time of the trigger watermark.

Then, the window processing can be implemented using this timer. For example, the timer can be set to the end time of a window period, the window can be closed by an event by the timer, and the window processing can be performed using the event of that period.

Note that, as a conventional technique of stream processing, there is a technique of giving priority to each processing in the stream processing and scheduling a processing order on the basis of the priority. Furthermore, there is a technique of grouping events according to processing for the events, causing an external device to perform a high-load event, processing a low-load event inside a gateway, integrating results, and generating the next event.

### [Citation List]

### [Patent Literature]

[PTL 1] Japanese Laid-open Patent Publication No. 2006-350828.
[PTL 2] U.S. Patent Application Publication No. 2015/0169724.

### [Summary]

### [Technical Problem]

However, it is inevitable that the event time of the event input from the external system will be past or future time in the stream processing. Then, in the case where the event time of the external service is ahead of the internal event time, the window processing is not performed for the event from the external system until the watermark of time after the event time is sent. Furthermore, in the case where the event time of the event from the external system is behind the internal event time, the event from the external system is out of target of the window processing and the window processing is not performed. In this way, the event is out of target for the window processing in the case where the event time is past time, and the window processing using the event is performed only after passage of time from reception of a result in the case where the event time is future time. Therefore, in the case where an event from the external system is included, it is difficult to perform accurate window processing.

As an example, a case of using processing of acquiring weather from location information as a service received from an external system will be described. In this case, it is conceivable to perform the stream processing of requesting the external system to acquire the weather by an event moved to a certain place, and aggregating results for each certain period. In this case, if weather information is sent at past event time, the weather information will not be aggregated. Conversely, if the weather information is sent at future event time, the results are aggregated after moving to another location, and accurate aggregation that reflects the current situation is not performed. For example, if the weather information is received at the event time one hour in the future, the situation one hour ago is collected as the actually collected weather information.

In the technique of giving priority to the stream processing, the event time of the event from the external system and the internal event time are not adjusted, and appropriate window processing is difficult. Furthermore, in the technique of causing the external system to perform a high-load event and processing a low-load event inside, and integrating the results, the event from the external system is not adjusted with the internal event time, and appropriate window processing is difficult.

The disclosed technique has been made in view of the foregoing, and an object of the disclosed technique is to provide a data processing program, a data processing method, and a data processing system that accurately perform stream processing.

### [Solution to Problem]

According to an aspect of the embodiments, a
data processing program in which a computer executes performs processing of: receiving a processing result processed by an external system; generating a first timestamp according to generated first time information that indicates internal time when receiving the processing result; outputting, before second time information that indicates time of after the first timestamp, external system data including the processing result that includes the first timestamp; and executing stream processing for the external system data at the time indicated by the second time information.

### [Advantageous Effects of Invention]

In one aspect, the present embodiments can accurately perform stream processing.

### [Brief Description of Drawings]

FIG. 1 is a block diagram of a data processing system according to a first embodiment;
FIG. 2 is a diagram for describing determination of event time using a timer function according to the first embodiment;
FIG. 3 is a diagram illustrating an example of a flow in which events of an external system are processed in the first embodiment;
FIG. 4 is a diagram illustrating an example of a relationship between events of an external system and a timer for window processing in the first embodiment;
FIG. 5A is a flowchart of an operation of an event distribution unit according to the first embodiment;
FIG. 5B is a flowchart of an operation of an event distribution unit according to the first embodiment;
FIG. 6 is a flowchart of an operation of an event arrangement unit according to the first embodiment;
FIG. 7 is a block diagram of a data processing system according to a second embodiment;
FIG. 8 is a diagram for describing rearrangement of events;
FIG. 9 is a diagram for describing determination of event time by a timer according to the second embodiment;
FIG. 10 is a diagram illustrating an example of a flow in which events of an external system are processed in the second embodiment;
FIG. 11 is a diagram illustrating an example of a relationship between events of an external system and a timer for window processing in the second embodiment;
FIG. 12 is a flowchart of an operation of an event rearrangement unit according to the second embodiment;
FIG. 13 is a flowchart of an operation of an event distribution unit according to the second embodiment;
FIG. 14 is a flowchart of an operation of an event correction unit according to the second embodiment;
FIG. 15 is a block diagram of a data processing system according to a third embodiment;
FIG. 16A is a flowchart of an operation of an event distribution unit according to the third embodiment;
FIG. 16B is a flowchart of an operation of an event distribution unit according to the third embodiment;

FIG. 17 is a flowchart of an operation of an event arrangement unit according to the third embodiment; and
FIG. 18 is a hardware structure diagram of the data processing system.

### [Description of Embodiments]

Hereinafter, embodiments of a data processing program, a data processing method, and a data processing system disclosed in the present application will be described in detail with reference to the drawings. Note that, the data processing program, data processing method, and data processing system disclosed in the present application are not limited by the following embodiments.

### [First Embodiment]

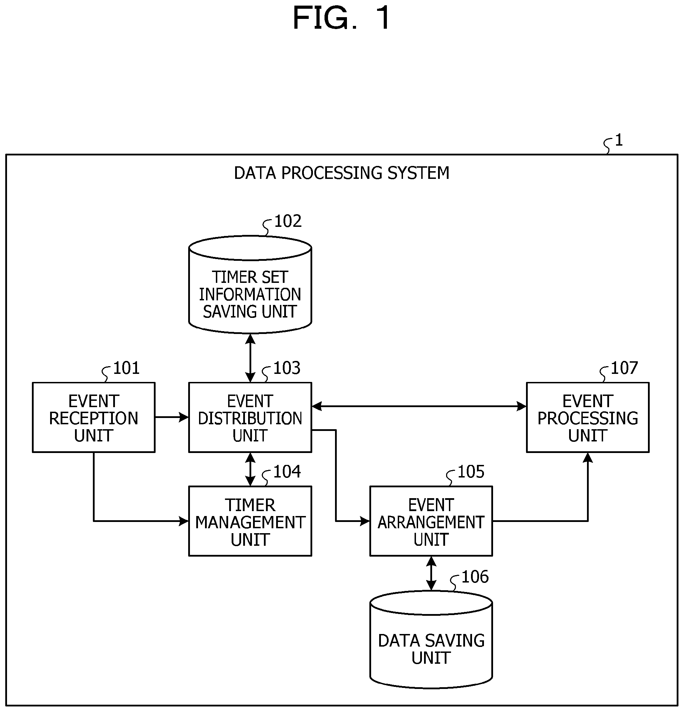

FIG. 1 is a block diagram of a data processing system according to a first embodiment. As illustrated in FIG. 1, a data processing system 1 according to the present embodiment includes an event reception unit 101, a timer set information saving unit 102, an event distribution unit 103, a timer management unit 104, an event arrangement unit 105, and a data saving unit 106, and an event processing unit 107. Here, in the data processing system 1 according to the present embodiment, the order of event time and event stream processing may be different.

The event reception unit 101 receives events from an external message system (not illustrated). The events sent from the external message system include not only normal events such as information collection, which is an original function, but also events such as input of processing results from the external system. Hereinafter, the event sent from the external system is referred to as an "external event". Then, the event reception unit 101 acquires event time included in the received event. Next, the event reception unit 101 generates a watermark from the acquired event time. In the present embodiment, the event reception unit 101 generates time obtained by subtracting two seconds from the event time as the watermark. Hereinafter, the time indicated by the watermark may be referred to as "current time".

Thereafter, the event reception unit 101 outputs the acquired event to the event distribution unit 103. Furthermore, the event reception unit 101 outputs the generated watermark to the event distribution unit 103 and the timer management unit 104.

The timer management unit 104 receives an input of the watermark from the event reception unit 101. Furthermore, the timer management unit 104 receives timer setting from the event distribution unit 103. Then, in a case where the current time indicated by the watermark becomes time of or after set time of the timer, the timer management unit 104 generates a timer event and outputs the timer event to the event distribution unit 103.

The timer set information saving unit 102 stores timer set information in which time set as firing time of the timer associated with a timer type is registered. The timer type includes timer set information of the timer set by a timer setting request, and timer set information of the external system set on the basis of an external event transmitted from the external system. The timer set information stored in the timer set information saving unit 102 is registered by the event distribution unit 103. Furthermore, the timer set information stored in the timer set information saving unit 102 is deleted when the timer set information is read by the event distribution unit 103.

The event distribution unit 103 receives an input of the normal event or the external event from the event reception unit 101. Furthermore, the event distribution unit 103 receives an input of the timer event from the timer management unit 104. Furthermore, the event distribution unit 103 receives the timer setting request from the event processing unit 107. Here, since the input of an event to the event distribution unit 103 can be said to be a request for distribution of the event, the event input and the timer setting request may be hereinafter collectively referred to as "request".

When the input request is the external event, the event distribution unit 103 outputs the external event to the event arrangement unit 105. Furthermore, the event distribution unit 103 acquires a latest watermark. This latest watermark is an example of "first time information". Then, the event distribution unit 103 notifies the timer management unit 104 of time obtained by adding a predetermined time to the current time indicated by the watermark. The predetermined time is the time to the next watermark, and here, since the next watermark is at least one second later, the predetermined time is set to one second. For example, the event distribution unit 103 notifies the timer management unit 104 of the time obtained by adding one second to the current time indicated by the watermark. As a result, the event distribution unit 103 sets the timer with the time obtained by adding one second to the current time indicated by the watermark. The time obtained by adding a predetermined time to the current time indicated by the watermark corresponds to a "first timestamp". Moreover, the event distribution unit 103 saves the time obtained by adding one second to the current time indicated by the watermark in the timer set information saving unit 102 as the timer set information of the external system.

When the input request is a normal event, the event distribution unit 103 outputs the input event to the event processing unit 107.

When the input request is the timer setting request, the event distribution unit 103 notifies the timer management unit 104 of the time specified in the timer setting request and sets the timer with the time specified in the timer setting request. Moreover, the event distribution unit 103 saves the time specified in the timer setting request in the timer set information saving unit 102 as the timer set information of the timer.

When the input event is the timer event, the event distribution unit 103 acquires the event time of the timer event. Then, the event distribution unit 103 acquires the timer set information of the acquired event time from the timer set information saving unit 102. At this time, the event distribution unit 103 deletes the acquired timer set information from the timer set information saving unit 102.

Next, the event distribution unit 103 determines whether the timer set information of the external system exists in the acquired timer set information. If the timer set information of the external system exists, the event distribution unit 103 outputs the acquired timer event to the event arrangement unit 105 as an arrangement event for instructing rearrangement of the external event. This is to rearrange the order to process the timer event after processing the external event first. The watermark that fires the timer event when the timer set information of the external system exists is an example of "second time information".

Next, the event distribution unit 103 determines whether or not the timer set information of the timer exists in the acquired timer set information. When the timer set information of the timer exists, the event distribution unit 103 outputs the timer event to the event processing unit 107.

Here, an overall flow of a method of generating the arrangement event by the event distribution unit 103 will be described. In this case, the event distribution unit 103 uses a function of the timer that makes a call when the set time has passed by checking the timing of the watermark as will be described below. Specifically, in a case of acquiring an event from the external system, the event distribution unit 103 notifies the timer management unit 104 of the time obtained by adding one second to the current watermark and sets the timer. Thereafter, by the function of the timer, the timer management unit 104 makes a call with the time obtained by adding one second to the previous watermark as an event time, as a timer event, in the next watermark. Then, the event distribution unit 103 transmits this call as an arrangement event to the event arrangement unit 105.

The event arrangement unit 105 receives an input of the external event from the event distribution unit 103. Then, the event arrangement unit 105 saves the acquired external event in the data saving unit 106.

Furthermore, the event arrangement unit 105 receives an input of the arrangement event instructing rearrangement of the external event from the event distribution unit 103. The event arrangement unit 105 acquires information of the external event specified in the arrangement event. Then, the event arrangement unit 105 sets the event time of the arrangement event as the event time of the specified external event among the external events stored in the data saving unit 106. Thereafter, the event arrangement unit 105 outputs the external event for which the event time has been newly set to the event processing unit 107. The event time of the arrangement event is the event time of the timer event, which is the time of an example of the "first timestamp" determined by the event distribution unit 103. Therefore, the external event for which the event time has been newly set corresponds to an example of "external system data including a processing result having the first timestamp".

The event processing unit 107 receives an input of an event, which is the normal event, from the event distribution unit 103. Furthermore, the event processing unit 107 receives an input of the timer event from the event distribution unit 103. Moreover, the event processing unit 107 receives an input of the external event from the event arrangement unit 105. Then, the event processing unit 107 performs stream processing for the normal event, the external event, and the timer event in the input order.

Furthermore, the event processing unit 107 outputs the timer setting request for window processing or the like to the event distribution unit 103. Thereafter, the event processing unit 107 receives an input of the timer event from the event distribution unit 103. Then, the event processing unit 107 performs the window processing using the timer event. At this time, the event processing unit 107 executes the window processing for an event having the event time included in a window that closes a period between the watermark of the timer event and a watermark before the watermark.

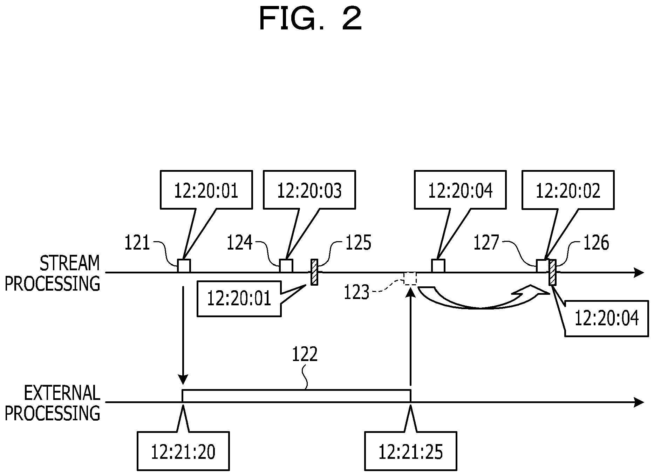

FIG. 2 is a diagram for describing determination of the event time using the timer function according to the first embodiment. The upper part facing the paper surface in FIG. 2 illustrates events to be stream-processed and the event time of each event. Furthermore, the lower part facing the paper surface in FIG. 2 illustrates the external processing by the external system and real time on the external system. In both the cases, a time passes toward the right, facing the paper surface.

For example, the data processing system 1 that is executing the stream processing requests the external system to execute the external processing on the basis of an event 121 at the timing of the event time of 12:20:01. At this time, the real time in the external system is 12:21:20. Then, the external system performs external processing 122 until the timing of the real time of 12:21:25. Then, the external system transmits an external event 123 that returns a processing result with 12:21:25 as the event time to the stream processing. Meanwhile, the data processing system 1 performs the stream processing for an event 124 with the event time of 12:20:03 and generates a watermark 125 of 21:20:01, which is the time obtained by subtracting two seconds. Thereafter, the data processing system 1 receives an input of the external event 123 from the external system.

From here, description will be given as internal processing of the data processing system 1. Since the watermark 125 at the timing of receiving the external event from the external system is 12:20:01, the event distribution unit 103 sets the timer with 12:20:02, which is obtained by adding one second to the watermark. Furthermore, the event arrangement unit 105 stores the external event 123 in the data saving unit 106. Then, a next watermark 126 of 12:20:04 arrives, and the timer event with the event time of 12:20:02 is input from the timer management unit 104. Then, the event distribution unit 103 transmits the timer event as an arrangement event to the event arrangement unit 105. The event arrangement unit 105 outputs an event 127 stored in the data saving unit 106 with the event time of the external event set to 12:20:02 to the event processing unit 107.

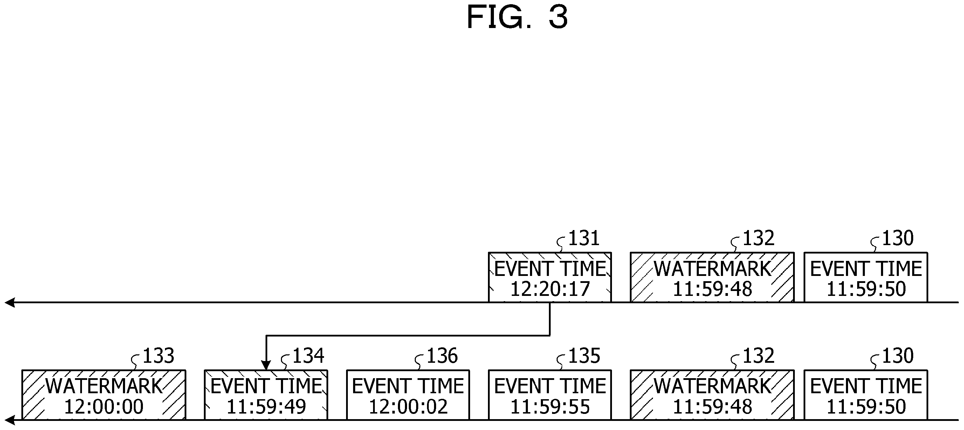

FIG. 3 is a diagram illustrating an example of a flow in which events of the external system are processed in the first embodiment. The upper part of FIG. 3 illustrates a state in which an external event has event time corresponding to the real time given by the external system, and the lower part illustrates a state of events input to the event processing unit 107. In both the cases, the time passes toward the left.

The event distribution unit 103 receives an input of an external event 131 from the external system. The event time represented by the real time of the external event 131 is 12:20:17, and a waiting time until the event is processed becomes long. Therefore, the event distribution unit 103 sets the timer with 11:59:49, which is obtained by adding one second to the time of a latest watermark 132 at that time. Thereafter, when a watermark 133 of 12:00:00 arrives, the timer of 11:59:49 fires, and an event 134 with the event time of 11:59:49 is input to the event processing unit 107. During this time, two events 135 and 136 with the event time of 11:59:55 and 12:00:02 have already been input to the event processing unit 107. Therefore, the event processing unit 107 performs the stream processing in the order of the event 135, the event 136, and the event 134. Here, since the data processing system 1 according to the present embodiment allows a mismatch between the event time and the processing order, there is no problem even if the stream processing is performed in this order. At this time, in a case of closing the window at the watermark 133, the event processing unit 107 performs the window processing using the event 134 in the window from 11:59:40 to 11:59:49, and performs the window processing using the events 130 and 135 in the window from 11:59:50 to 11:59:59.

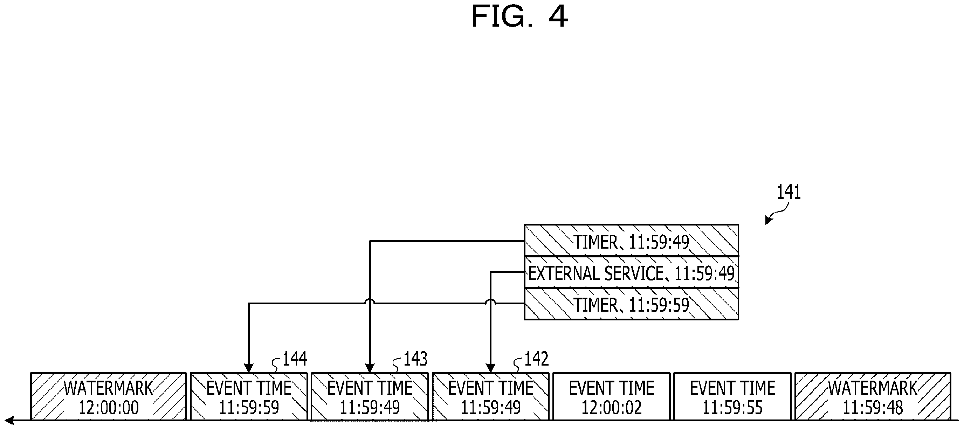

FIG. 4 is a diagram illustrating an example of a relationship between events of the external system and the timer for the window processing in the first embodiment. Here, a case where the external processing and the window processing are performed for the same watermark will be described with reference to FIG. 4.

Here, a case where timer set information 141 is stored in the timer set information saving unit 102 will be described. In this case, the timer set information 141 includes timer set information of the timer with a set value of 11:59:49, timer set information of the external system with a set value of 11:59:49, and timer set information of the timer with a set value of 11:59:59. The timer event here is an event for the window processing.

Here, even if there is a plurality of timers set with the same time, the timer fires only once. Therefore, in the data processing system 1 according to the present embodiment, in the case of the timers with the same time, after the event arrangement unit 105 outputs the external event to the event processing unit 107, the event distribution unit 103 outputs the timer event to the event processing unit 107.

In the case of FIG. 4, there are the timer for the external system and the timer for the window processing that fire at 11:59:49. Then, when the watermark of 12:00:00 arrives, the event processing unit 107 processes the external event as an event 142 with the event time of 11:59:49. Thereafter, the event processing unit 107 processes the timer event as an event 143 with the event time of 11:59:49 and performs the window processing. Thereafter, the event processing unit 107 processes the timer event as an event 144 with the event time of 11:59:59 and performs the window processing.

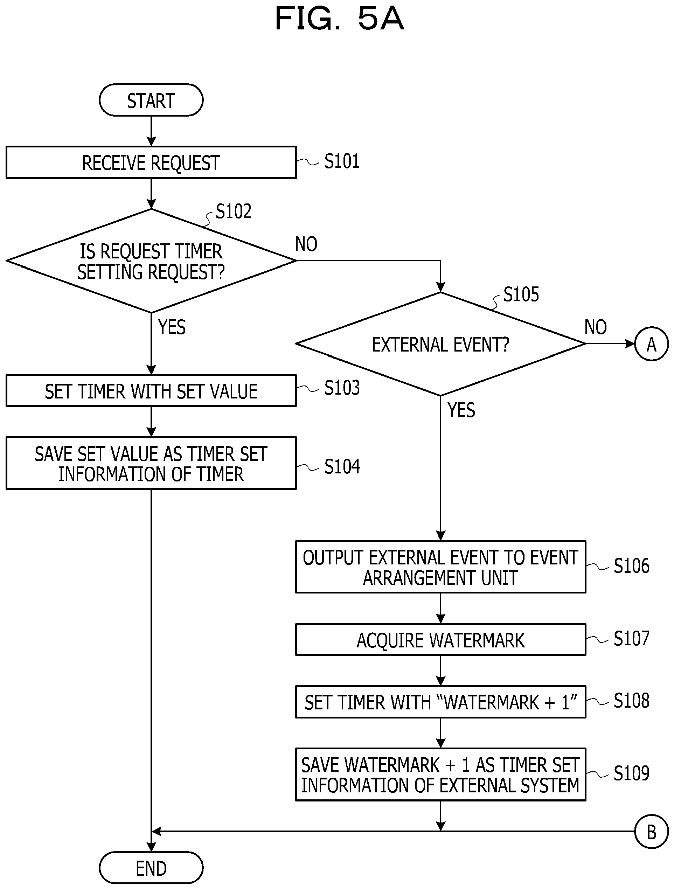

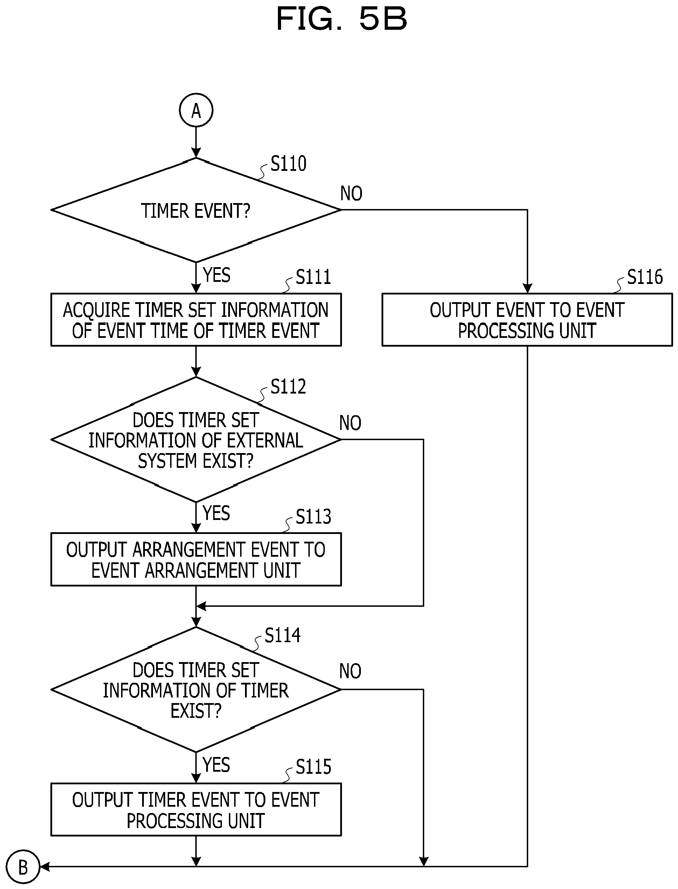

FIGs. 5A and 5B are a flowchart of an operation of an event distribution unit according to the first embodiment. Next, a flow of processing of the event distribution unit 103 according to the first embodiment will be described with reference to FIGs. 5A and 5B.

The event distribution unit 103 receives the request (step S101).

Next, the event distribution unit 103 determines whether the received request input from the event processing unit 107 is the timer setting request (step S102).

When the request is the timer setting request (step S102: affirmative), the event distribution unit 103 notifies the timer management unit 104 of the set value specified in the timer setting request and sets the timer (step S103).

Thereafter, the event distribution unit 103 saves the time specified in the timer setting request in the timer set information saving unit 102 as the timer set information of the timer (step S104). Thereafter, the event distribution unit 103 terminates the processing for the received request.

On the other hand, when the request is not the timer setting request (step S102: negative), the event distribution unit 103 determines whether or not the processing target of the request is the external event (step S105).

When the processing target is the external event (step S105: affirmative), the event distribution unit 103 outputs the external event to the event arrangement unit 105 (step S106).

Next, the event distribution unit 103 acquires the latest watermark (step S107).

Next, the event distribution unit 103 notifies the timer management unit 104 of the time obtained by adding one second to the current time indicated by the watermark, and sets the timer with the time obtained by adding one second to the current time indicated by the watermark (step S108).

Next, the event distribution unit 103 saves the time obtained by adding one second to the current time indicated by the watermark in the timer set information saving unit 102 as the timer set information of the external system (step S109). Thereafter, the event distribution unit 103 terminates the processing for the received request.

On the other hand, when the processing target is not the external event (step S105: negative), the event distribution unit 103 determines whether or not the processing target of the request is the timer event (step S110).

When the processing target is the timer event (step S110: affirmative), the event distribution unit 103 acquires the event time of the timer event. Then, the event distribution unit 103 acquires the timer set information of the acquired event time from the timer set information saving unit 102 (step S111).

Next, the event distribution unit 103 determines whether or not the timer set information of the external system exists in the acquired timer set information (step S112). When the timer set information of the external system does not exist (step S112: negative), the event distribution unit 103 proceeds to step S114.

On the other hand, when the timer set information of the external system exists (step S112: affirmative), the event distribution unit 103 outputs the acquired timer event to the event arrangement unit 105 as the arrangement event for instructing rearrangement of the external event (step S113).

Next, the event distribution unit 103 determines whether or not timer set information of the timer exists in the acquired timer set information (step S114). When the timer set information of the timer does not exist (step S114: negative), the event distribution unit 103 terminates the processing for the received request.

In contrast, when the timer set information of the timer exists (step S114: affirmative), the event distribution unit 103 outputs the timer event to the event processing unit 107 (step S115). Thereafter, the event distribution unit 103 terminates the processing for the received request.

On the other hand, when the processing target is not the timer event (step S110: negative), the event distribution unit 103 determines that the processing target of the request is the normal event. Then, the event distribution unit 103 outputs the event to the event processing unit 107 (step S116).

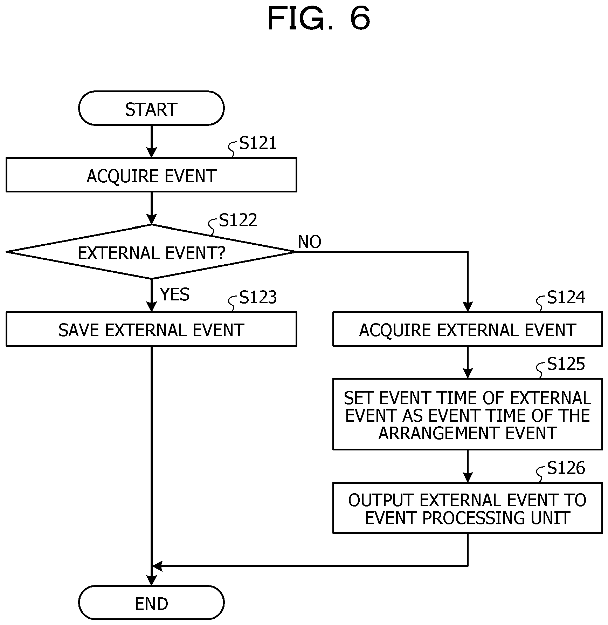

FIG. 6 is a flowchart of an operation of an event arrangement unit according to the first embodiment. Next, a flow of processing of the event arrangement unit 105 according to the first embodiment will be described with reference to FIG. 6.

The event arrangement unit 105 acquires an event (step S121).

Next, the event arrangement unit 105 determines whether or not the acquired event is the external event (step S122). When the event is the external event (step S122: affirmative), the event arrangement unit 105 saves the external event in the data saving unit 106 (step S123). After that, the event arrangement unit 105 terminates the processing for the acquired event.

On the other hand, when the event is not the external event (step S122: negative), the event is the arrangement event. Thus the event arrangement unit 105 acquires the external event for which rearrangement has been specified in the arrangement event from the data saving unit 106 (step S124).

Next, the event arrangement unit 105 sets the event time of the acquired external event as the event time of the arrangement event (step S125).

Then, the event arrangement unit 105 outputs the external event to which the event time has been newly given to the event processing unit 107 (step S126). After that, the event arrangement unit 105 terminates the processing for the acquired event.

Here, in the present embodiment, the reason why the problem does not arise in rewriting the event time of the external event by the timer using the watermark will be described. Putting the event of the event time between the watermarks in front of the later watermark does not contradict the watermark's role of indicating the event time has advanced by the event time. Therefore, even if the event time is rewritten in this way, the role of the watermark is not destroyed. Furthermore, the timer that operates at the timing of the watermark fires at the event time until the watermark. When setting the timer, the value obtained by adding a predetermined time shorter than the time to the next watermark to the watermark is set, so that the timer fires at the timing of the next watermark. For example, in the case where there is an interval of one second or more to the next watermark, the timer is set with the time obtained by adding one second to the current watermark. For example, setting the event time when setting the timer as the event time of the external event makes it possible to handle the event from the external system without contradicting the watermark. From the above discussion, it can be said that the problem of rewriting the event time of the external event in the data processing system 1 according to the present embodiment does not arise.

As described above, the data processing system according to the present embodiment causes the external event input from the external system to wait, and sets the timer with the time obtained by adding a predetermined time to the latest watermark. Thereafter, the data processing system performs the stream processing for the external event using the time of firing as the event time in response to the firing of the timer. For example, the data processing system according to the present embodiment converts the external event into the event of the event time up to the next watermark, using the timer function, and processes the external event.

As a result, the processing result acquired from the external system can be stream-processed according to the event time of the current stream processing, and the window processing for the processing result from the external system can be appropriately performed.

### [Second Embodiment]

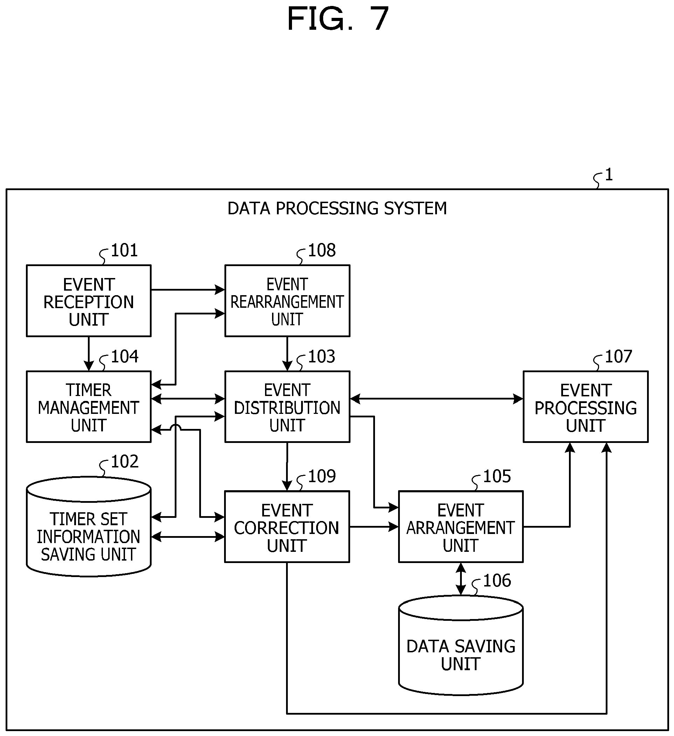

FIG. 7 is a block diagram of a data processing system according to a second embodiment. Since events are rearranged after being received by an event reception unit and processed in a rearranged order by an event processing unit, an event of an event time older than an already processed event may arrive and may be processed if time obtained by adding a predetermined period to a watermark is simply used as an event time of an external event, as in the first embodiment. Therefore, a data processing system 1 according to the present embodiment performs stream processing for events in an event time order by further correcting the time obtained by adding a predetermined period to a watermark, and using the time as the event time of the external event. In the following description, description of operation of each unit similar to that of the first embodiment will be omitted.

An event rearrangement unit 108 rearranges normal events received by an event reception unit 101 in order of event time. The operation of the event rearrangement unit 108 will be described below.

The event rearrangement unit 108 has information of a rearrangement period in advance. Then, in a case where a timer for rearrangement is not set at the start of operation, the event rearrangement unit 108 notifies a timer management unit 104 of timer set time for rearrangement, and sets the timer with the timer set time for rearrangement.

Furthermore, the event rearrangement unit 108 receives an input of an event from the event reception unit 101. When the input event is an external event, the event rearrangement unit 108 outputs the external event to an event distribution unit 103. In contrast, when the input event is a normal event, the event rearrangement unit 108 saves the normal event in its own storage unit.

Then, the event rearrangement unit 108 receives an input of a timer event from the timer management unit 104 by firing the timer at timing of the timer set time for rearrangement. Next, the event rearrangement unit 108 acquires the event time of the acquired timer event. Next, the event rearrangement unit 108 acquires normal events within the event time of the timer event from the normal events held by itself. Next, the event rearrangement unit 108 rearranges the extracted normal events in order of event time. Then, the event rearrangement unit 108 outputs the normal events to the event distribution unit 103 in the rearranged order.

Thereafter, the event rearrangement unit 108 notifies the timer management unit 104 of an end of a next period as the timer set time for rearrangement, and sets the timer with the timer set time for rearrangement.

When receiving the input of the timer event from the timer management unit 104, the event distribution unit 103 outputs an arrangement event instructing rearrangement of the external event to an event correction unit 109 as an event time same as the event time of the timer event.

The timer management unit 104 receives a notification of set time of the timer for correction calculated by the event correction unit 109 from the event correction unit 109, and sets the timer with the set time of the timer for correction. Then, when the set time of the timer for correction has arrived, the timer fires, and the timer management unit 104 outputs the timer event to the event correction unit 109.

The event correction unit 109 sets the event time of the external event to appropriate time by further correcting the event time of the external event, which is the time obtained by adding one second to the watermark by the event distribution unit 103. The operation of correcting the event time of the external event by the event correction unit 109 will be described in detail below.

The event correction unit 109 receives an input of the arrangement event instructing rearrangement of the external event from the event distribution unit 103. Furthermore, the event correction unit 109 receives an input of the timer event from the timer management unit 104 by the firing the timer at the time indicated by the timer set value for the correction calculated by the event correction unit 109 itself.

When the input event is the arrangement event, the event correction unit 109 acquires the latest watermark. Next, the event correction unit 109 calculates a timer set value for correction from the acquired watermark and rearrangement period.

For example, when the watermark is W and the rearrangement period is S, the event correction unit 109 calculates a set value for correction of the timer by an expression (W + 1)/S) × S) - 1. For example, suppose the watermark is 100 seconds and events up to 100 seconds have passed. Furthermore, the rearrangement period is an interval of ten seconds. In this case, the event correction unit 109 calculates the timer set value for correction as (100 + 1)/10) × 10) - 1 = 99. In this expression, ") (closing parenthesis)" without the opening parenthesis is a function to get an integer part up to that point. In this case, processing of the event having the event time up to 99 seconds is completed.

Next, the event correction unit 109 determines whether or not the event time of the arrangement event and the timer set value for correction match. When the event time of the arrangement event and the timer set value for correction do not match, the event correction unit 109 notifies the timer management unit 104 of the calculated timer set time for correction and sets the timer with the timer set time for correction. This timer set value corresponds to an example of "second timestamp".

On the other hand, when the event time of the arrangement event and the timer set value for correction match, the event time of the external event does not need to be corrected. Therefore, the event correction unit 109 performs similar processing to the processing of the case of receiving the input of the timer event from the timer management unit 104 when the timer fires at the timer set time for correction. Hereinafter, the processing of the case of receiving the input of the timer event from the timer management unit 104 when the timer fires at the timer set time for correction will be described.

In the case of receiving the input of the timer event, the event correction unit 109 acquires the event time of the timer event. Note that, in the case where the event time of the arrangement event and the timer set value for correction match, the event correction unit 109 acquires the event time of the arrangement event.

Then, the event correction unit 109 acquires the timer set information of the acquired event time from a timer set information saving unit 102. At this time, the event correction unit 109 deletes the acquired timer set information from the timer set information saving unit 102.

Next, the event correction unit 109 determines whether or not the timer set information of the external system exists in the acquired timer set information. If the timer set information of the external system exists, the event correction unit 109 outputs the acquired timer event to an event arrangement unit 105 as the arrangement event instructing rearrangement of the external event. Here, even if there is a plurality of pieces of timer set information of the external system, the event correction unit 109 outputs one arrangement event.

Next, the event correction unit 109 determines whether or not the timer set information of the timer exists in the acquired timer set information. When the timer set information of the timer exists, the event correction unit 109 outputs the timer event to an event processing unit 107.

The event arrangement unit 105 receives an input of the external event from the event distribution unit 103. Then, the event arrangement unit 105 saves the acquired external event in a data saving unit 106.

Furthermore, the event arrangement unit 105 receives an input of the arrangement event instructing rearrangement of the external event from the event correction unit 109. The event arrangement unit 105 acquires information of the external event specified in the arrangement event. Then, the event arrangement unit 105 sets the event time of the specified external event among the external events stored in the data saving unit 106 as the event time of the arrangement event. Thereafter, the event arrangement unit 105 outputs the external event for which the event time has been newly set to the event processing unit 107. Here, in a case where a plurality of external events is saved in the data saving unit 106, the event arrangement unit 105 outputs all the saved external events to the event processing unit 107.

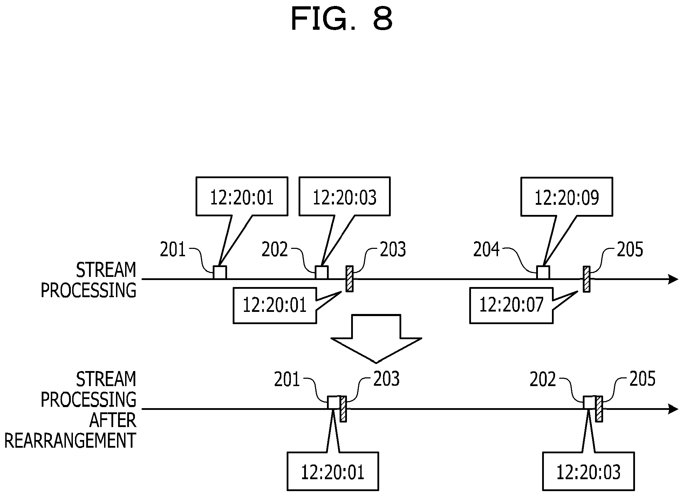

FIG. 8 is a diagram for describing rearrangement of events. Next, an example of event rearrangement by the event rearrangement unit 108 will be described with reference to FIG. 8. Here, when the event rearrangement interval is two seconds will be described. Here, the rearrangement is performed at the timing of a watermark in a period from 12:20:00 to 12:20:01 and a period from 12:20:02 to 12:20:03.

An event reception unit 101 receives an event 201 with the event time of 12:20:01 an event 202 with the event time of 12:20:03, and an event 204 with the event time of 12:20:09, as illustrated in stream processing in the upper part facing the paper surface of FIG 8. Then, the event reception unit 101 sends a watermark 203 having the current time of 12:20:01, which is two seconds early, due to the event 202 having the event time of 12:20:03. Furthermore, the event reception unit 101 sends a watermark 205 having the current time of 12:20:07 that is two seconds early due to the event 204 having the event time of 12:20:09. Here, a watermark due to the event 201 with the event time of 12:20:01 is not sent.

The event rearrangement unit 108 chronologically rearranges events between 12:20:00 and 12:20:01 based on the watermark 203, and outputs the event 201 to the event processing unit 107, as illustrated in the stream processing after rearrangement in the lower part, facing the paper surface of FIG. 8. Furthermore, the event rearrangement unit 108 chronologically rearranges events between 12:20:02 and 12:20:03 on the basis of the watermark 205, and outputs the event 202 to the event processing unit 107. Rearrangement of events in the periods from 12:20:04 to 12:20:05 and from 12:20:06 to 12:20:07 are performed based on the watermark 205, but there are no events in these periods in FIG. 8. Therefore, the rearrangement is not performed and no events are output. The event 204 is output according to the subsequent watermark.

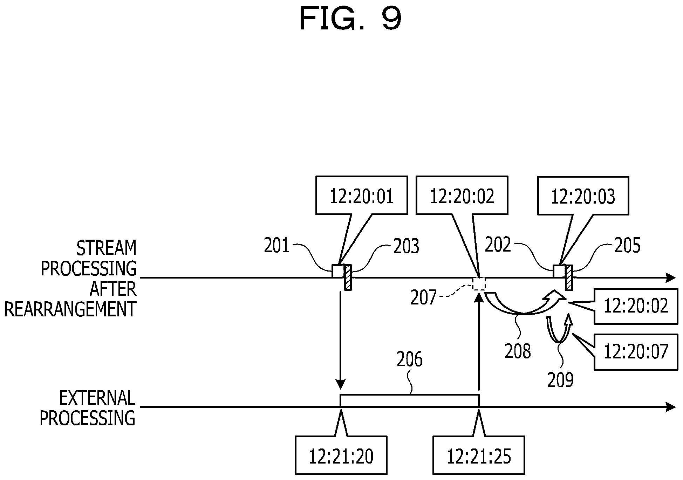

FIG. 9 is a diagram for describing determination of the event time by the timer according to the second embodiment. Next, an example of a procedure for determining the event time by the timer according to the present embodiment will be described with reference to FIG. 9. Here, the event distribution unit 103 receives an input of the event 201 having the event time of 12:20:01 and an input of the event 202 having the event time of 12:20:03. Furthermore, the current time of the watermark 203 is 12:20:01, and the current time of the watermark 205 is 12:20:07. These are the inputs of the events after the rearrangement in FIG. 8.

The external system receives a processing request at the timing of 12:20:01 at the event time. Then, the external system executes processing 206 between 12:21:20 and 12:21:25 in real time of the external system. Then, the external system transmits an external event to the data processing system 1 at the timing of 12:21:25 in real time. Here, since the current time is 12:20:01, the timer is set with 12:20:02, which is time obtained by adding one second. In this case, since this external event is subject to arrangement at the timing of the watermark of 12:20:07,it is favorable to place the external event after the event with the event time in the period from 12:20:02 to 12:20:07. For example, it is favorable that the external event has the event time of 12:20:07. Therefore, the following processing is performed.

The event reception unit 101 receives an external event 207 and outputs the external event 207 to the event distribution unit 103. The event distribution unit 103 acquires the external event 207 and sets a timer 208 with 12:20:02, which is the time obtained by adding one second to the latest watermark 203 of 12:20:01 at that time. Thereafter, in response to the timer event from the timer management unit 104, the event distribution unit 103 outputs an arrangement event with the event time of 12:20:02 to the event correction unit 109.

The event correction unit 109 calculates which range of event times have already been sent to the event processing unit 107 from the latest watermark 205 of 12:20:07 at that time. Here, the event correction unit 109 determines that the events up to 12:20:07 has been sent. Then, the event correction unit 109 sets a timer 209 with 12:20:07, which is the already sent event time. Since the current time of the watermark 205 is 12:20:07, the event correction unit 109 receives an input of the timer event with the event time of 12:20:07 at that timing. The event correction unit 109 outputs the arrangement event having the event time of 12:20:07, which is the event time of the timer event, to the event arrangement unit 105. The event correction unit 109 passes the arrangement event of the external event to the event arrangement unit 105 in a case where there is timer set information of the external system, and outputs the timer event to the event processing unit 107 in a case where the timer set information of the timer is present thereafter.

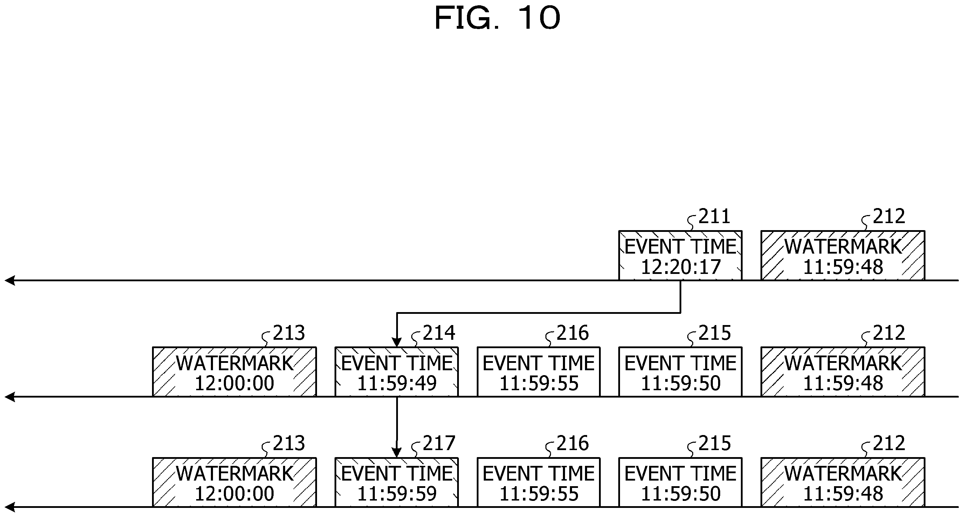

FIG. 10 is a diagram illustrating an example of a flow in which events of the external system are processed in the second embodiment. Next, a flow of processing of the external events according to the present embodiment will be described with reference to FIG. 10. Here, a case where rearrangement is performed at intervals of ten seconds will be described as an example.

The event reception unit 101 sends a watermark 212 of 11:59:48. Thereafter, the event reception unit 101 receives an event 211, which is an external event of the event time of 12:20:17, as illustrated in the time series of the upper part of FIG. 10. This event time is the time along the real time of the external system.

The event distribution unit 103 sets the timer for the event 211 with the time obtained by adding one second to 11:59:48 that is the current time of the watermark 212. Thereby, the timer fires at a next watermark 213 of 12:00:00, an event 214 is processed before the watermark 213, and the event time is set to 11:59:49. At this point, an event 215 of 11:59:50 and an event 216 of the event time of 11:59:55 have been accepted. At this point, the events 215 to 216 are arranged in the event time order but the event 214 is not arranged in the event time order, as illustrated in the time series of the middle part of FIG. 10.

Therefore, the event correction unit 109 sets the timer with 11:59:59, which is the last time in the time range for rearrangement by the watermark 213. This timer fires at the same watermark 213 as the timer that has generated the event 214 and is processed before the watermark 213. The timer fires at the watermark when time earlier than the watermark that has fired the timer is set.

Then, as illustrated in the time series of the lower part of FIG. 10, the event correction unit 109 outputs an arrangement event with the event time of 11:59:59, which is the timer time, to the event arrangement unit 105, and the event arrangement unit 105 outputs an event 217 with the event time of the arrangement event as the event time of the external event to the event processing unit 107. As a result, the events 215 to 217 are arranged in the event time order, and the event processing unit 107 can process the events in the event time order.

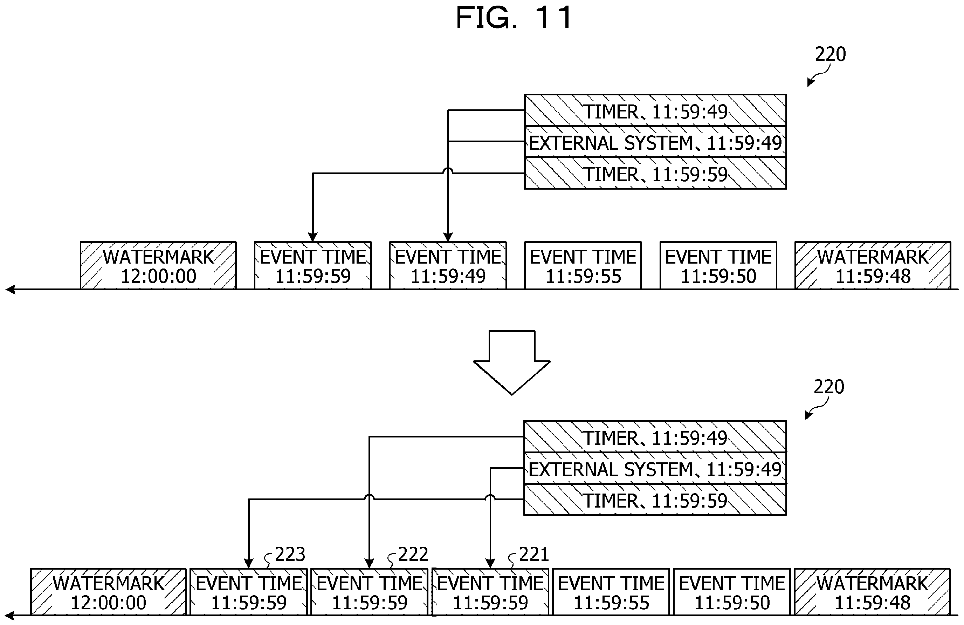

FIG. 11 is a diagram illustrating an example of a relationship between events of the external system and a timer for window processing in the second embodiment. Next, the relationship between the events of the external systems and the timer for the window processing in the present embodiment will be described with reference to FIG. 11.

A case where timer set information 220 is stored in the timer set information saving unit 102 will be described. In this case, the timer set information 220 includes timer set information of the timer with a set value of 11:59:49, timer set information of the external system with a set value of 11:59:49, and timer set information of the timer with a set value of 11:59:59. The timer event here is an event for the window processing.

Since each timer fires at each timer set time, the timers fire at 11:59:49 and 11:59:59 in the state of the upper part of FIG. 11. The arrangement event is output from the event distribution unit 103 to the event correction unit 109 when the timer fires at 11:59:49, and the event correction unit 109 sets the timer with the rearrangement time. Thereby, the timer of 11:59:59, which is the time of the rearrangement period immediately before the watermark of 12:00:00, is set based on the firing of the timer of 11:59:49.

Then, the timer of 11:59:59 fires, and the arrangement event is output from the event distribution unit 103 to the event correction unit 109. The event correction unit 109 determines the order of an event 221 that is the external event and events 222 and 223 for the window processing. Then, the events 221, 222 and 223 are processed according to the determined order. In this case, when the event processing unit 107 performs the window processing for a ten-second period, the event 221 is processed in the window processing as an event in the period from 11:59:50 to 11:59:59 together with a previous event.

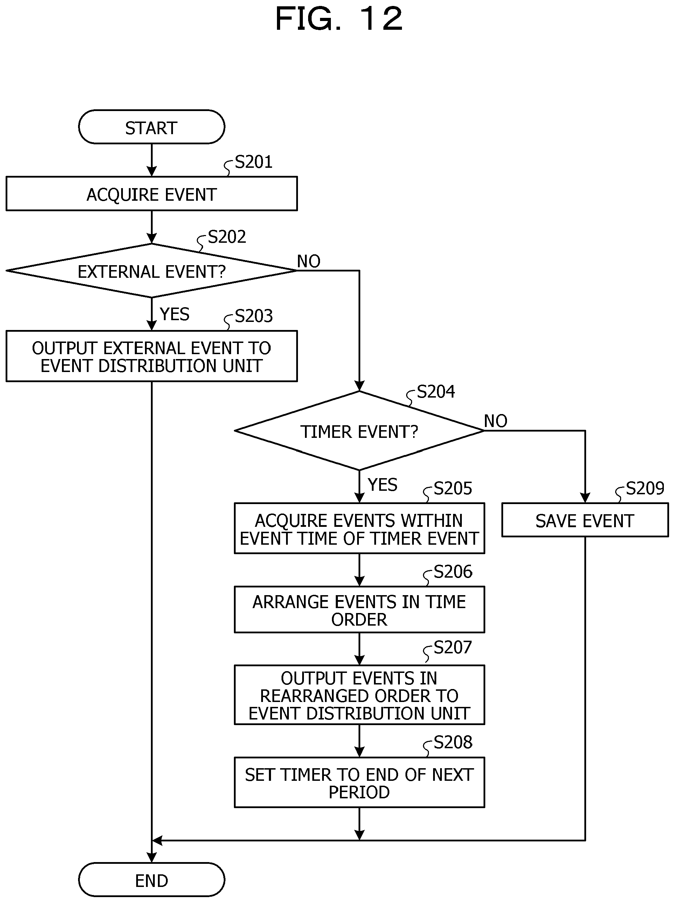

FIG. 12 is a flowchart of an operation of the event rearrangement unit according to the second embodiment. Next, a flow of processing of the event rearrangement unit 108 will be described with reference to FIG. 12.

Furthermore, the event rearrangement unit 108 receives an input of an event from the event reception unit 101 or the timer management unit 104 (step S201).

Next, the event rearrangement unit 108 determines whether or not the input event is the external event (step S202).

When the input event is the external event (step S202: affirmative), the event rearrangement unit 108 outputs the external event to the event distribution unit 103 (step S203).

On the other hand, when the input event is not the external event (step S202: negative), the event rearrangement unit 108 determines whether or not the input event is the timer event (step S204).

When the input event is the timer event (step S204: affirmative), the event rearrangement unit 108 acquires the event time of the acquired timer event. Next, the event rearrangement unit 108 acquires normal events within the event time of the timer event from the normal events held by itself (step S205).

Next, the event rearrangement unit 108 rearranges the extracted normal events in the event time order (step S206).

Next, the event rearrangement unit 108 outputs the normal events in the rearranged order to the event distribution unit 103 (step S207).

Thereafter, the event rearrangement unit 108 notifies the timer management unit 104 of the end of the next period as the timer set time for rearrangement, and sets the timer with the timer set time for rearrangement (step S208).

On the other hand, when the input event is not the timer event (step S204: negative), the event rearrangement unit 108 determines that the input event is the normal event. Then, the event rearrangement unit 108 saves the normal event in its own storage unit (step S209).

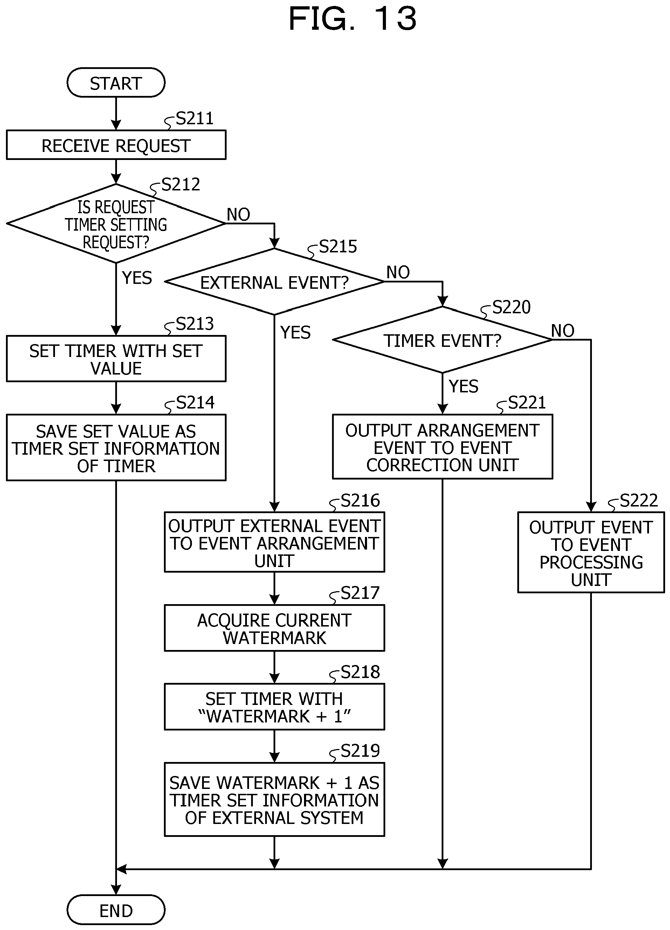

FIG. 13 is a flowchart of an operation of an event distribution unit according to the second embodiment. Next, a flow of processing of the event distribution unit 103 according to the present embodiment will be described with reference to FIG. 13.

The event distribution unit 103 receives the request (step S211).

Next, the event distribution unit 103 determines whether or not the received request input from the event processing unit 107 is the timer setting request (step S212).

When the request is the timer setting request (step S212: affirmative), the event distribution unit 103 notifies the timer management unit 104 of the set value specified in the timer setting request and sets the timer (step S213).

Thereafter, the event distribution unit 103 saves the time specified in the timer setting request in the timer set information saving unit 102 as the timer set information of the timer (step S214). Thereafter, the event distribution unit 103 terminates the processing for the received request.

On the other hand, when the request is not the timer setting request (step S212: negative), the event distribution unit 103 determines whether or not the processing target of the request is the external event (step S215).

When the processing target is the external event (step S215: affirmative), the event distribution unit 103 outputs the external event to the event arrangement unit 105 (step S216).

Next, the event distribution unit 103 acquires the latest watermark (step S217).

Next, the event distribution unit 103 notifies the timer management unit 104 of the time obtained by adding one second to the current time indicated by the watermark, and sets the timer with the time obtained by adding one second to the current time indicated by the watermark (step S218).

Next, the event distribution unit 103 saves the time obtained by adding one second to the current time indicated by the watermark in the timer set information saving unit 102 as the timer set information of the external system (step S219). Thereafter, the event distribution unit 103 terminates the processing for the received request.

On the other hand, when the processing target is not the external event (step S215: negative), the event distribution unit 103 determines whether or not the processing target of the request is the timer event (step S220).

When the processing target is the timer event (step S220: affirmative), the event distribution unit 103 outputs the acquired timer event to the event correction unit 109 as the arrangement event instructing correction of the event time (step S221).

On the other hand, when the processing target is not the timer event (step S220: negative), the event distribution unit 103 determines that the processing target of the request is the normal event. Then, the event distribution unit 103 outputs the event to the event processing unit 107 (step S222) .

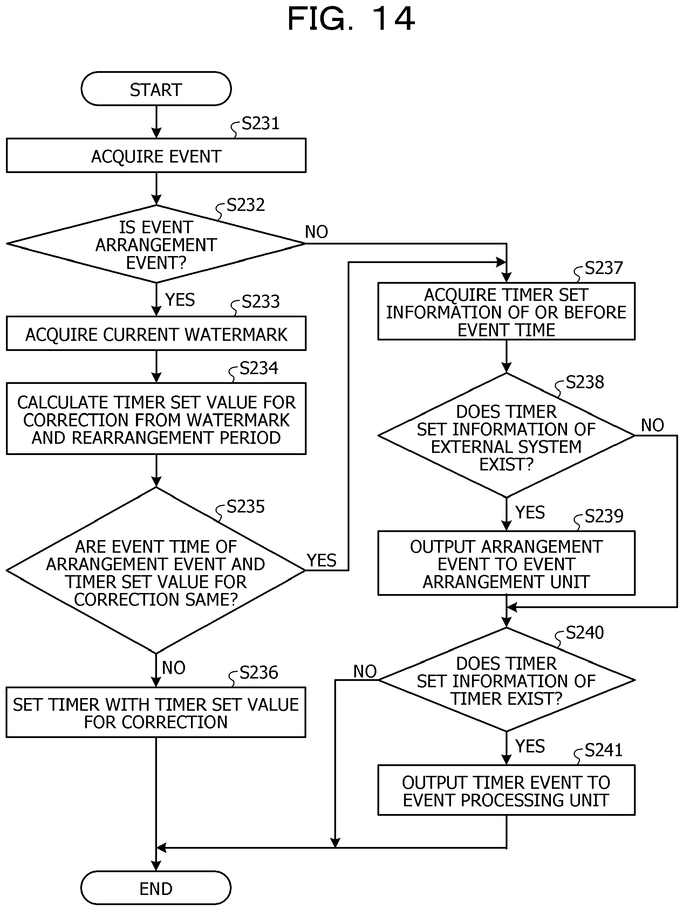

FIG. 14 is a flowchart of an operation of the event correction unit according to the second embodiment. Next, a flow of processing of the event correction unit 109 according to the present embodiment will be described with reference to FIG. 14.

The event correction unit 109 acquires an event from the event distribution unit 103 or the timer management unit 104 (step S231).

Next, the event correction unit 109 determines whether or not the acquired event is the arrangement event (step S232).

When the acquired event is the arrangement event (step S232: affirmative), the event correction unit 109 acquires the latest watermark (step S233).

Next, the event correction unit 109 calculates the timer set value for correction from the acquired watermark and rearrangement period (step S234).

Next, the event correction unit 109 determines whether or not the event time of the arrangement event and the timer set value for correction are the same (step S235).

When the event time of the arrangement event and the timer set value for correction do not match (step S235: negative), the event correction unit 109 notifies the timer management unit 104 of the calculated timer set time for correction. Thereby, the event correction unit 109 sets the timer with the timer set time for correction (step S236). After that, the event correction unit 109 terminates the processing for the acquired event.

In contrast, when the event time of the arrangement event and the timer set value for correction are the same (step S235: affirmative), the event correction unit 109 proceeds to step S237. Furthermore, in the case where the acquired event is not the arrangement event (step S232: negative), the event correction unit 109 determines that the acquired event is the timer event. Then, in this case as well, the event correction unit 109 proceeds to step S237.

The event correction unit 109 acquires the event time of the timer event or the arrangement event. Then, the event correction unit 109 acquires the timer set information of or before the acquired event time from the timer set information saving unit 102 (step S237).

Next, the event correction unit 109 determines whether or not the timer set information of the external system exists in the acquired timer set information (step S238). When the timer of the external system does not exist (step S238: negative), the event correction unit 109 proceeds to step S240.

On the other hand, when the timer set information of the external system exists (step S238: affirmative), the event correction unit 109 outputs the acquired timer event to the event arrangement unit 105 as the arrangement event for instructing rearrangement of the external event (step S239).

Next, the event correction unit 109 determines whether or not the timer set information of the timer exists in the acquired timer set information (step S240). When the timer set information of the timer does not exist (step S240: negative), the event correction unit 109 terminates the processing for the acquired event.

In contrast, when the timer set information of the timer exists (step S240: affirmative), the event correction unit 109 outputs the timer event to the event processing unit 107 (step S241). After that, the event correction unit 109 terminates the processing for the acquired event.

As described above, the data processing system according to the present embodiment causes the external event input from the external system to wait, and sets the timer with the time obtained by adding a predetermined time to the latest watermark. Thereafter, the data processing system sets the timer again with the time obtained by further correcting the event time of the external event with the time corresponding to the firing of the timer. Thereafter, the stream processing is performed for the external event, using the time when the reset timer has fired as the event time. For example, the data processing system according to the present embodiment converts the external event into the event of the event time up to the next watermark, using the timer function, and processes the external event.

Thereby, the processing result acquired from the external system can be made to correspond to the event time, and each event can be stream-processed according to the event time. Furthermore, by processing the timer event for the window processing after the processing result from the external system, it is possible to appropriately perform the window processing for the processing result from the external system while maintaining the processing order of the events.

### [Third Embodiment]

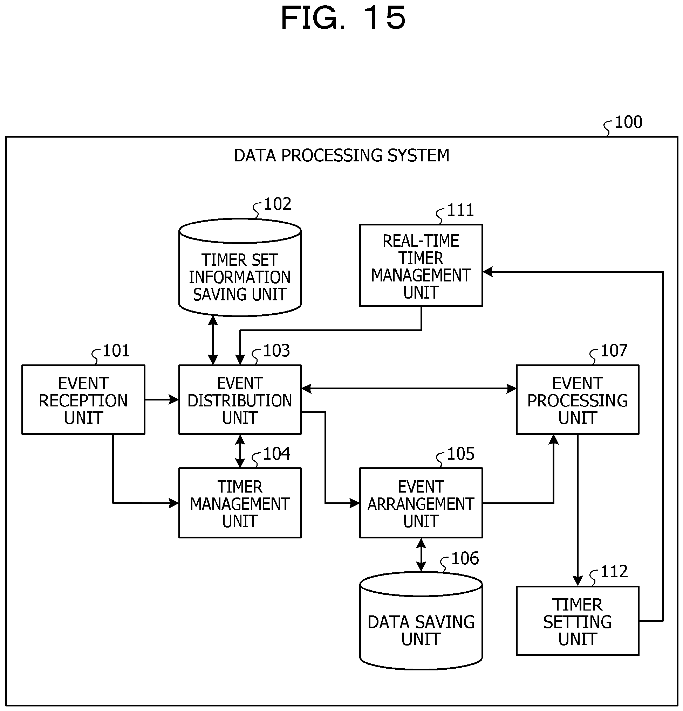

FIG. 15 is a block diagram of a data processing system according to a third embodiment. A data processing system 1 according to the present embodiment adjusts an event time of a real-time timer event using a real-time timer to an event time in its own device. The real-time timer is used to treat a processing result as a timeout when the processing result from an external system does not arrive even after passage of a predetermined time. The data processing system 1 according to the present embodiment has a real-time timer management unit 111 and a timer setting unit 112 in addition to the respective units of the first embodiment. In the following description, description of functions of respective units similar to the first embodiment will be omitted.

In the present embodiment, since a real-time timer event in which real time is set as an event time is handled, it is needed to appropriately set the event time for the event from the real-time timer management unit 111.

The timer setting unit 112 receives a real-time timer setting request from an event processing unit 107. This is a real-time timer version of a timer setting request at an event time from the event processing unit 107 to an event distribution unit 103. Then, the timer setting unit 112 notifies the real-time timer management unit 111 of the requested time and sets the real-time timer.

The real-time timer management unit 111 receives the notification of the real-time time from the timer setting unit 112. This real-time time corresponds to an example of "elapsed data". Then, the real-time timer management unit 111 sets the real-time timer with the notified time. Thereafter, when the real-time time arrives, the real-time timer fires, and the real-time timer management unit 111 outputs a real-time timer event to the event distribution unit 103.

The event distribution unit 103 receives an input of the real-time timer event from the real-time timer management unit 111. Then, the event distribution unit 103 outputs a real-time timer event to the event arrangement unit 105. Next, the event distribution unit 103 acquires a latest watermark at that time. Next, the event distribution unit 103 notifies a timer management unit 104 of the time obtained by adding one second to the acquired watermark, and sets the timer with the time obtained by adding one second to the acquired watermark. Moreover, the event distribution unit 103 stores, in a timer set information saving unit 102, timer set information of the real-time timer in which the type of the timer is the real-time timer and the time is the time obtained by adding one second to the watermark.

Thereafter, when receiving an input of the timer event from the timer management unit 104, the event distribution unit 103 acquires the event time of the timer event. Next, the event distribution unit 103 acquires the timer set information of the acquired time from the timer set information saving unit 102. At this time, the event distribution unit 103 deletes the acquired timer set information from the timer set information saving unit 102.

Next, the event distribution unit 103 determines whether or not the timer set information of the external system and the timer set information of the real-time timer exist in the acquired timer set information. If the timer set information of the external system and the timer set information of the real-time timer exist, the event distribution unit 103 outputs the timer set information to the event arrangement unit 105 as the arrangement event for instructing rearrangement of the acquired external event and real-time timer event. Next, the event distribution unit 103 determines whether or not the timer set information of the timer exists in the acquired timer set information. When the timer set information of the timer exists, the event distribution unit 103 outputs all the timer events corresponding to the timer set information to an event processing unit 107.

The event arrangement unit 105 receives an input of the external event and the real-time timer event from the event distribution unit 103. Then, the event arrangement unit 105 saves the acquired external event and real-time timer event in a data saving unit 106.

Furthermore, the event arrangement unit 105 acquires the arrangement event from the event distribution unit 103. Then, the event arrangement unit 105 acquires the external event from the data saving unit 106. At this time, the event arrangement unit 105 deletes the external event from the data saving unit 106. Thereafter, the event arrangement unit 105 changes the event time of the acquired external event to the event time of the arrangement event, and outputs all the external events saved in the data saving unit 106 to the event processing unit 107. Next, the real-time timer event is acquired from the data saving unit 106. At this time, the event arrangement unit 105 deletes the real-time timer event from the data saving unit 106. Thereafter, the event arrangement unit 105 changes the event time of the acquired real-time timer event to the event time of the arrangement event, and outputs all the real-time timer events saved in the data saving unit 106 to the event processing unit 107. The external event is output to the event processing unit 107 first and then the real-time timer event is output to the event processing unit 107 because the real-time timer is used for the timeout. If the external event and the real-time timer have the same event time, this is to avoid the timeout.

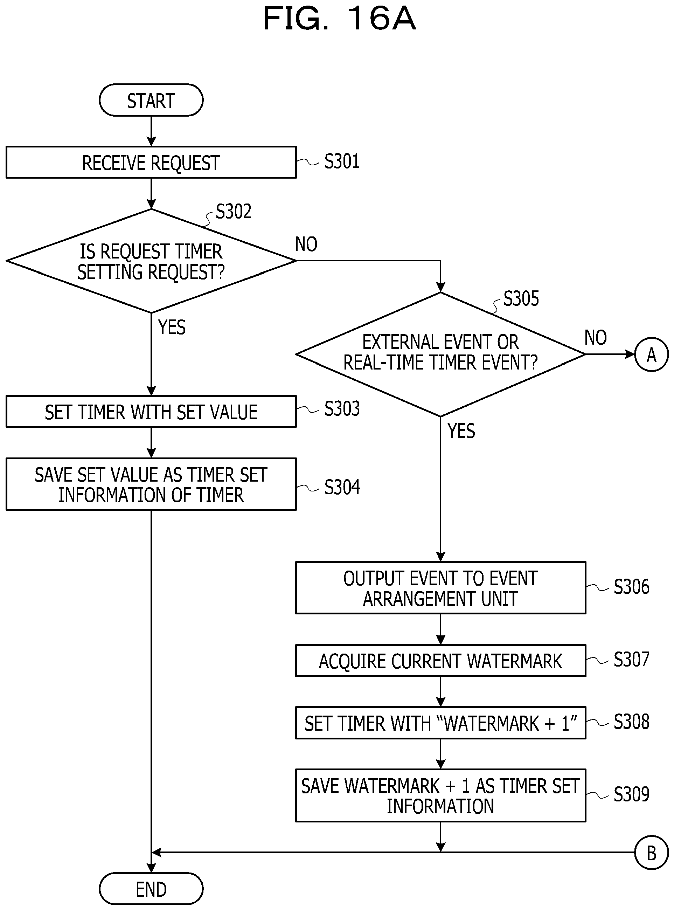

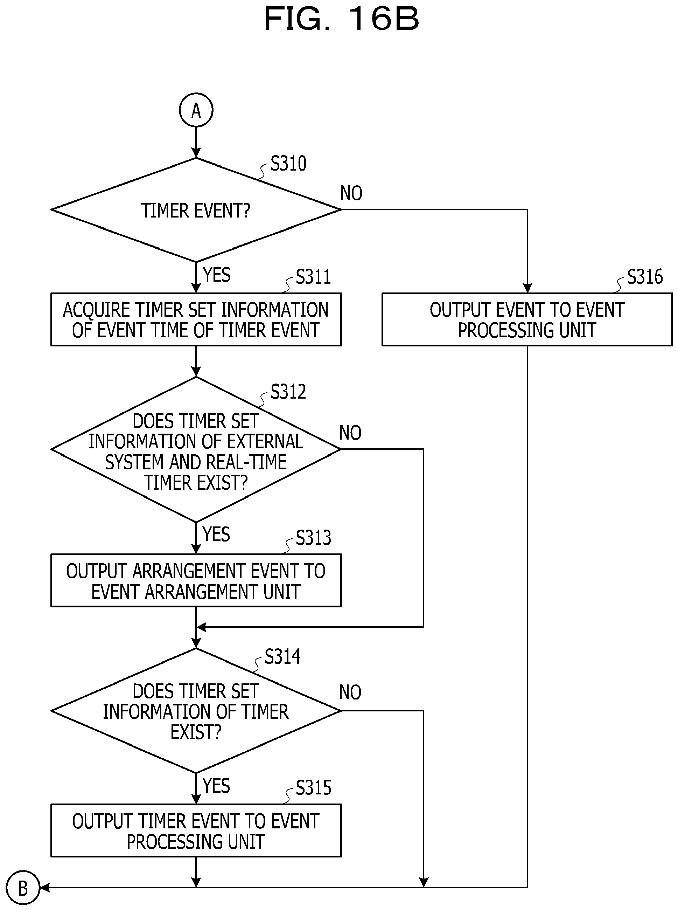

FIGs. 16A and 16B are a flowchart of an event distribution unit according to the third embodiment. Next, a flow of processing of the event distribution unit 103 according to the present embodiment will be described with reference to FIGs. 16A and 16B.

The event distribution unit 103 receives a request (step S301).

Next, the event distribution unit 103 determines whether or not the received request input from the event processing unit 107 is the timer setting request (step S302).

When the request is the timer setting request (step S302: affirmative), the event distribution unit 103 notifies the timer management unit 104 of the set value specified in the timer setting request and sets the timer (step S303).

Thereafter, the event distribution unit 103 saves the time specified in the timer setting request in the timer set information saving unit 102 as the timer set information of the timer (step S304). Thereafter, the event distribution unit 103 terminates the processing for the received request.

On the other hand, when the request is not the timer setting request (step S302: negative), the event distribution unit 103 determines whether or not the processing target of the request is the external event or the real-time timer event (step S305).

When the processing target is the external event or the real-time timer event (step S305: affirmative), the event distribution unit 103 outputs the external event or the real-time timer event to the event arrangement unit 105 (step S306).

Next, the event distribution unit 103 acquires the latest watermark (step S307).

Next, the event distribution unit 103 notifies the timer management unit 104 of the time obtained by adding one second to the current time indicated by the watermark, and sets the timer with the time obtained by adding one second to the current time indicated by the watermark (step S308).

Next, the event distribution unit 103 saves the time obtained by adding one second to the current time indicated by the watermark in the timer set information saving unit 102 as the timer set information of the real-time timer (step S309). Thereafter, the event distribution unit 103 terminates the processing for the received request.

On the other hand, when the processing target is neither the external event nor real-time timer event (step S305: negative), the event distribution unit 103 determines whether or not the processing target of the request is the timer event (step S310).

When the processing target is the timer event (step S310: affirmative), the event distribution unit 103 acquires the event time of the timer event. Then, the event distribution unit 103 acquires the timer set information of the acquired event time from the timer set information saving unit 102 (step S311) .

Next, the event distribution unit 103 determines whether or not the timer set information of the external system and the real-time timer exists in the acquired timer set information (step S312). When the timer set information of the external system and the real-time timer does not exist (step S312: negative), the event distribution unit 103 proceeds to step S314.

On the other hand, when the timer set information of the external system and the real-time timer exists (step S312: affirmative), the event distribution unit 103 outputs the acquired timer event to the event arrangement unit 105 as the arrangement event (step S313).

Next, the event distribution unit 103 determines whether or not timer set information of the timer exists in the acquired timer set information (step S314). When the timer set information of the timer does not exist (step S314: negative), the event distribution unit 103 terminates the processing for the received request.

In contrast, when the timer set information of the timer exists (step S314: affirmative), the event distribution unit 103 outputs the timer event to the event processing unit 107 (step S315). Thereafter, the event distribution unit 103 terminates the processing for the received request.

On the other hand, when the processing target is not the timer event (step S310: negative), the event distribution unit 103 determines that the processing target of the request is the normal event. Then, the event distribution unit 103 outputs the event to the event processing unit 107 (step S316).

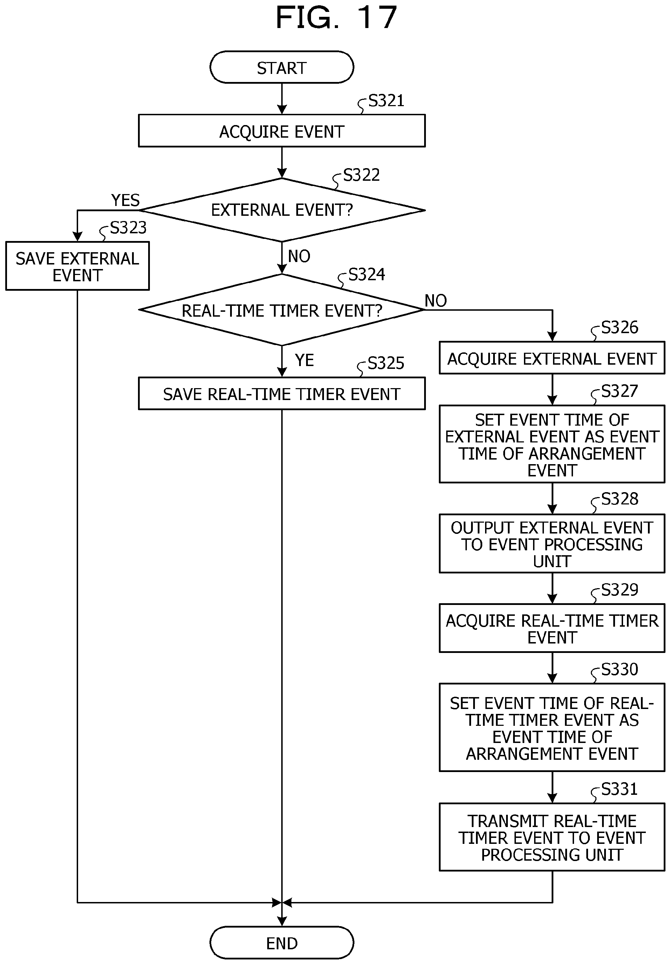

FIG. 17 is a flowchart of an operation of the event arrangement unit according to the third embodiment. Next, a flow of processing of the event arrangement unit 105 according to the third embodiment will be described with reference to FIG. 17.

The event arrangement unit 105 acquires an event (step S321).

Next, the event arrangement unit 105 determines whether or not the acquired event is the external event (step S322). When the event is the external event (step S322: affirmative), the event arrangement unit 105 saves the external event in the data saving unit 106 (step S323). After that, the event arrangement unit 105 terminates the processing for the acquired event.

On the other hand, when the acquired event is not the external event (step S323: negative), the event arrangement unit 105 determines whether or not the acquired event is the real-time timer event (step S324). When the event is the real-time timer event (step S324: affirmative), the event arrangement unit 105 saves the real-time timer event in the data saving unit 106 (step S325). After that, the event arrangement unit 105 terminates the processing for the acquired event.

On the other hand, when the event is not the real-time timer event (step S324: negative), the event is the arrangement event and thus the event arrangement unit 105 acquires the external event from the data saving unit 106 (step S326).

Next, the event arrangement unit 105 sets the event time of the acquired external event as the event time of the arrangement event (step S327).

Then, the event arrangement unit 105 outputs the external event to which the event time has been newly given to the event processing unit 107 (step S328).

Thereafter, the event arrangement unit 105 acquires the real-time timer event from the data saving unit 106 (step S329).

Next, the event arrangement unit 105 sets the event time of the acquired real-time timer event as the event time of the arrangement event (step S330).

Then, the event arrangement unit 105 outputs the real-time timer event to which the event time has been newly given to the event processing unit 107 (step S331). After that, the event arrangement unit 105 terminates the processing for the acquired event.

As described above, the data processing device according to the present embodiment adjusts the event time of the real-time timer event using the real-time timer to the internal event time. As a result, it is possible to control how long the processing result acquired from the external system is waited, and it is possible to perform stream processing including the timeout result. For example, window processing can be performed for the processing result by setting cases where the timeout occurs and cases where the processing result is received as a total number. Therefore, it is possible to appropriately perform the window processing for the processing result from the external system.

### (Hardware Structure)

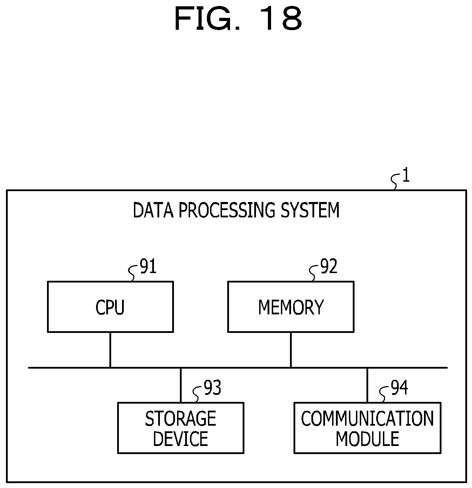

FIG. 18 is a hardware structure diagram of the data processing system. The data processing system 1 according to the present embodiment has, for example, the hardware configuration illustrated in FIG. 18. The data processing system 1 includes a CPU 91, a memory 92, a storage device 93, and a communication module 94. The CPU 91, the memory 92, the storage device 93, and the communication module 94 are connected to one another by a bus.

The storage device 93 is an auxiliary storage device such as a solid state drive (SSD) or a hard disk. The storage device 93 implements the functions of the timer set information saving unit 102 and the data saving unit 106 illustrated in FIG. 1, 7 or 15. Furthermore, the storage device 93 stores various programs including a program for operating the event reception unit 101, the event distribution unit 103, the timer management unit 104, the event arrangement unit 105, and the event processing unit 107, which are illustrated in FIGs. 1, 7, and 15. Moreover, the storage device 93 stores various programs including a program for operating the event rearrangement unit 108 and the event correction unit 109 illustrated in FIG. 7. Moreover, the storage device 93 stores various programs including a program for operating the real-time timer management unit 111 and the timer setting unit 112 illustrated in FIG. 15.

The communication module 94 is a network interface for the event reception unit 101 to communicate with an external device. For example, the CPU 91 communicates with an external message system via the communication module 94.

The memory 92 is a main storage device such as a synchronous dynamic random access memory (SDRAM).

The CPU 91 reads out the various programs stored in the storage device 93, expands the programs on the memory 92, and executes the programs, thereby implementing the functions of the event reception unit 101, the event distribution unit 103, the timer management unit 104, the event arrangement unit 105, and the event processing unit 107 illustrated in FIGs. 1, 7, and 15. Furthermore, the CPU 91 reads out the various programs stored in the storage device 93, expands the programs on the memory 92, and executes the programs, thereby implementing the functions of the event rearrangement unit 108 and the event correction unit 109 illustrated in FIG. 7. Moreover, the CPU 91 reads out the various programs stored in the storage device 93, expands the programs on the memory 92, and executes the programs, thereby implementing the functions of the real-time timer management unit 111 and the timer setting unit 112 illustrated in FIG. 15.

## Claims

1. A data processing program in which a computer executes performs processing of:
receiving a processing result processed by an external system;
generating a first timestamp according to generated first time information that indicates internal time when receiving the processing result;
outputting, before second time information that indicates time of after the first timestamp, external system data including the processing result that includes the first timestamp; and
executing stream processing for the external system data at the time indicated by the second time information.

2. The data processing program according to claim 1, where the outputting includes outputting the external system data, using a timer event generated at time indicated by the first timestamp.

3. The data processing program according to claim 1 or 2, wherein the processing further comprising:
receiving data that includes time of after the time indicated by the first time information, wherein
the executing includes executing the stream processing for the external system data and the received data.

4. The data processing program according to claim 3, wherein the processing further comprising:
generating a second timestamp that indicates time of after time included in the received data by correcting the first timestamp; and
outputting corrected external system data that includes the second timestamp after outputting the received data when generating the second time information, wherein
the executing includes executing the stream processing for the corrected external system data and the received data at the time indicated by the second time information.

5. The data processing program according to claim 1, wherein the processing further comprising
receiving elapsed data that indicates that a fixed time has elapsed at external time in the external system, wherein
the generating include generating the first timestamp according to generated first time information that indicates internal time when receiving the elapsed data;
the outputting includes the outputting the elapsed data that includes the first timestamp before the second time information; and
the executing includes executing the stream processing for the elapsed data at the time indicated by the second time information.

6. A data processing method comprising:
receiving a processing result processed by an external system;
generating a first timestamp according to generated first time information that indicates internal time when receiving the processing result;
outputting, before second time information that indicates time of after the first timestamp, external system data including the processing result that includes the first timestamp; and
executing stream processing for the external system data at the time indicated by the second time information.

7. A data processing system comprising:
an event reception unit configured to receive a processing result processed by an external system;
an event distribution unit configured to generate a first timestamp according to generated first time information that indicates internal time when receiving the processing result;
an event arrangement unit configure to output, before second time information that indicates time of after the first timestamp, external system data including the processing result that includes the first timestamp; and
an event processing unit configured to execute stream processing for the external system data at the time indicated by the second time information.
